# EUROPÄISCHE PATENTSCHRIFT

(11) **EP 0 562 131 B1**
(45) Veröffentlichungstag und Bekanntmachung des Hinweises auf die Patenterteilung: **24.05.1995**
(21) Anmeldenummer: 92104965.6
(22) Anmeldetag: 23.03.1992
(51) Int. Cl.: A01F 29/20

(54) **Gegenschneide für Feldhäcksler**
Shearbar for forage harvester
Contre-couteau pour faucheuse-hacheuse

(43) Veröffentlichungstag der Anmeldung: 29.09.1993
(73) Patentinhaber: CLAAS SAULGAU GMBH, D-88340 Saulgau (DE)
(72) Erfinder: Reber, Erwin, W-7968 Saulgau (DE); Rauch, Hans, W-7968 Saulgau-Kleintissen (DE)

(56) Entgegenhaltungen:
- EP-A- 0 093 940
- EP-A- 0 287 159
- US-A- 3 077 911

## Beschreibung

Die Erfindung bezieht sich auf eine Gegenschneide für Feldhäcksler, die lösbar mit einem maschinenfesten Sattel zu verspannen ist.

Solche Kombinationen von Gegenschneide und Sattel sind z. B. durch die US-PS 33 42 231 und die Europäische Patentschrift 0093 940 bekannt, die dem Oberbegriff des ersten Anspruchs entsprechen.

Die Gegenschneiden von Feldhäckslern werden durch periodische Kräfte belastet, deren Frequenz von der Drehzahl der Messerträger und der Anzahl der Messer abhängt. Diese periodischen Kräfte erregen die Gegenschneiden zu Eigenschwingungen. Man hat deshalb versucht, die Sättel so aufzuwölben, daß die Gegenschneiden mit einer Vorspannung auf den Sätteln aufliegen. Damit wurde ein Teilerfolg erzielt, aber immer noch nicht erreicht, daß die Gegenschneiden auf ihrer ganzen Länge mit etwa gleicher Spannung auf den Sätteln aufliegen und dadurch wirklich schwingungsfrei gelagert sind. Darüber hinaus waren die Wölbungen an den Sätteln fertigungstechnisch nur schwer herzustellen und konnten bei etwaigem Reibverschleiß auch nicht nachgearbeitet werden.

Mit der Erfindung soll die Aufgabe gelöst werden, eine Verbindung zwischen Gegenschneide und Sattel herzustellen, die über die ganze Länge der Gegenschneide einen gleichmäßigen Auflagedruck ermöglicht, und außerdem noch einfach herzustellen und in ihrer Wirksamkeit lange zu erhalten ist.

Erfindungsgemäß, wie beansprucht, wird das dadurch erreicht, daß die dem Sattel zugewandte Fläche der Gegenschneide im losen Zustand in ihrer Längserstreckung konvex bogenförmig ausgebildet ist, während die Oberfläche des Sattels eben bleibt. Wenn darüber hinaus der Bogen der Gegenschneide so ausgebildet ist, daß seine Form der theoretischen Biegelinie eines mit einer konstanten Flächenlast belasteten Balkens entspricht, dann liegt die Gegenschneide im verspannten Zustand gleichmäßig satt auf dem Sattel auf und kann an keiner Stelle in Schwingung geraten.

Die Gegenschneide kann erfindungsgemäß in ihrer Längserstrek kung ein konstantes Flächenträgheitsmoment oder im mittleren Bereich ein größeres Flächenträgheitsmoment als in den äußeren Bereichen aufweisen. Im ersten Fall ist dann vorzugsweise eine spanlose Herstellung und im zweiten Fall eine spanabhebende Herstellung der Gegenschneide vorgesehen.

Die Erfindung wird anhand von drei Abbildungen beispielsweise erläutert:
- Figur 1: zeigt eine Gegenschneide im losen Zustand und einen Sattel eines Feldhäckslers von vorne
- Figur 2: zeigt den gleichen Gegenstand im verspannten Zustand
- Figur 3: zeigt einen Gegenstand wie in Figur 1, aber mit anderer Ausführung der Gegenschneide
Ein schwerer Sattel (1) ist mit einem nicht dargestellten Feldhäcksler fest verbunden. Er ist dazu bestimmt, eine Gegenschneide (2) zu tragen, die ihrerseits mit den Messern einer nicht dargestellten Messertrommel oder Messerscheibe zusammenarbeitet. Der Sattel (1) hat Gewindebohrungen (3), die Befestigungsschrauben (4) aufnehmen. Die dem Sattel (1) zugewandte Fläche (5) der Gegenschneide (2) ist derart bogenförmig konvex ausgebildet, daß der Bogen der theoretischen Biegelinie eines Trägers entspricht, der mit einer konstanten Streckenlast belastet ist. Die Pfeilhöhe (6) des Bogens wird nach der Größe der Gegenschneide (2) und der Belastung gewählt.

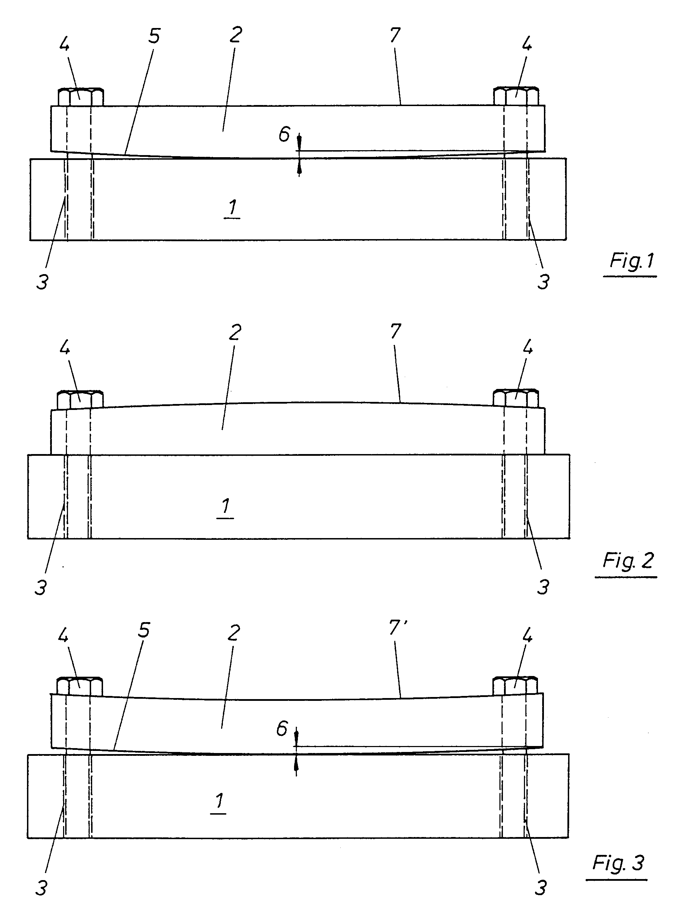

Wenn die Gegenschneide (2) mittels der Befestigungsschrauben (4) mit dem Sattel (1) verspannt wird (Figur 2), wird die zuvor gewölbte Fläche (5) eben und die Gegenschneide (2) liegt in ihrer ganzen Länge satt und mit etwa gleichem Druck auf dem Sattel (1) auf.

Die Oberseite (7, 7') der Gegenschneide (2) kann, wie in Figur 1 dargestellt, im losen Zustand eben, oder wie in Figur 3 dargestellt, im losen Zustand konkav gewölbt sein.

Mit dieser Ausgestaltung wird erreicht, daß die Gegenschneide (2) so mit dem Sattel (1) verspannt ist, daß ein Flattern unmöglich wird.

## Patentansprüche

1. Gegenschneide für Feldhäcksler, die lösbar mit einen ebenen Oberfläche eines maschinenfesten Sattels zu verspannen ist, dadurch gekennzeichnet, daß die dem Sattel (1) zugewandte Fläche (5) der Gegenschneide (2) im losen Zustand in ihrer Längserstrekkung konvex bogenförmig ausgebildet ist.

2. Gegenschneide nach Anspruch 1, dadurch gekennzeichnet, daß der Bogen der Fläche (5) der theoretischen Biegelinie eines mit einer konstanten Flächenlast belasteten Biegebalkens entspricht.

3. Gegenschneide nach den Ansprüchen 1 oder 2, dadurch gekennzeichnet, daß die Gegenschneide (2) in ihrer Längserstreckung ein konstantes Flächenträgheitsmoment besitzt.

4. Gegenschneide nach den Ansprüchen 1 oder 2, dadurch gekennzeichnet, daß die Gegenschneide im mittleren Bereich ihrer Längserstreckung ein größeres Flächenträgheitsmoment als in ihren äußeren Bereichen besitzt.

## Claims

1. A cutter bar for forage harvesters, which is to be releasably braced to a flat surface of a saddle which is fined with respect to the machine, characterised in that the surface (5) of the cutter bar (2) which is towards the saddle (1) is of a convexly arcuate configuration in its longitudinal extent in the loose condition.

2. A cutter bar according to claim 1 characterised in that the arc of the surface (5) corresponds to the theoretical bending line of a bending bed which is loaded with a constant area load.

3. A cutter bar according to claim 1 or claim 2 characterised in that the cutter bar (2) has a constant surface bent of inertia in its longitudinal extent.

4. A cutter bar according to claim 1 or claim 2 characterised in that the cutter bar has a greater surface moment of inertia in the middle region of its longitudinal extent than in its outer regions.

## Revendications

1. Contre-couteau pour faucheuse-hacheuse, qui doit être serré de façon dégageable sur une surface plane d'une selle fixée à la machine, caractérisé en ce que la surface (5) du contre-couteau (2) qui est tournée vers la selle (1) est constituée, quand elle est à l'état libre, sous une forme courbe et convexe dans son étendue longitudinale.

2. Contre-couteau selon la revendication 1, caractérisé en ce que la courbure de la surface (5) correspond à la courbe de flexion élastique théorique d'une poutre flexible chargée par une charge superficielle constante.

3. Contre-couteau selon la revendication 1 ou 2, caractérisé en ce que le contre-couteau (2) présente dans son étendue en longueur un moment d'inertie superficiel constant.

4. Contre-couteau selon la revendication 1 ou 2, caractérisé en ce que le contre-couteau présente dans la partie centrale de son étendue en longueur un moment d'inertie superficiel plus important que dans ses parties extérieures.
